# FASCICULE DE BREVET EUROPEEN

(11) **EP 1 356 736 B1**
(45) Date de publication et mention de la délivrance du brevet: **17.01.2007**
(21) Numéro de dépôt: 03009220.9
(22) Date de dépôt: 23.04.2003
(51) Int. Cl.: A23C 13/00, A23L 1/19, A23J 1/20, A23J 3/08, A23J 3/30, A23L 1/305

(54) **Crème laitière reconstituée**
Rekonstituierte Sahne
Reconstituted dairy cream

(30) Priorité: 23.04.2002 EP 02009021
(43) Date de publication de la demande: 29.10.2003
(73) Titulaire: Faculté Universitaire des Sciences Agronomiques de Gembloux, 5030 Gembloux (BE)
(72) Inventeur: Danthine, Sabine, 5218 Couthuin (BE); Blecker, Christophe, 5380 Fernelmont (BE); Paquot, Michel, 5310 Noville/Mehaigne (BE); Deroanne, Claude, 5030 Gembloux (BE)
(74) Mandataire: Brants, Johan P.E.

(56) Documents cités:
- GB-A- 1 470 896
- US-A- 4 140 810
- DATABASE WPI Section Ch, Week 199117 Derwent Publications Ltd., London, GB; Class D13, AN 1991-122600 XP002210735 & JP 03 063293 A (CHUGAI PHARM CO LTD), 19 mars 1991 (1991-03-19)
- DATABASE FSTA [en ligne] INTERNATIONAL FOOD INFORMATION SERVICE (IFIS), FRANFURT/MAIN, DE; PELTONEN R I: "Characterization of whey protein concentrates with regard to factors that affect their function at interfaces." Database accession no. 83-2-12-g0869 XP002210731 & DISSERTATION ABSTRACTS INTERNATIONAL, B 2491: ORDER NO. 8300319, 297PP. 1983 OHIO STATE UNIV., 190 NORTH OVAL DRIVE, COLUMBUS, OHIO 43210, USA, vol. 43, no. 8,
- DATABASE BIOSIS [en ligne] BIOSCIENCES INFORMATION SERVICE, PHILADELPHIA, PA, US; 2002 INNOCENTE N ET AL: "Proteose-peptone whey fraction as emulsifier in ice-cream preparation." Database accession no. PREV200200238029 XP002246692 & INTERNATIONAL DAIRY JOURNAL, vol. 12, no. 1, 2002, pages 69-74, 2002 ISSN: 0958-6946
- DATABASE FSTA [en ligne] INTERNATIONAL FOOD INFORMATION SERVICE (IFIS), FRANFURT/MAIN, DE; JELEN P ET AL: "Separation of nitrogenous residues from deproteinated whey for lactose crystallization." Database accession no. 74-3-04-p0544 XP002210732 & JOURNAL OF DAIRY SCIENCE 1973 DEPT. OF FOOD SCI. & NUTR., UNIV. OF MINNESOTA, ST. PAUL, 55101, USA, vol. 56, no. 12, pages 1492-1497,
- DATABASE FSTA [en ligne] INTERNATIONAL FOOD INFORMATION SERVICE (IFIS), FRANFURT/MAIN, DE; ZARB J M ET AL: "Application of the Wyeth procedure to whey protein concentrates." Database accession no. 80-1-07-p1212 XP002210733 & NEW ZEALAND JOURNAL OF DAIRY SCIENCE AND TECHNOLOGY 1979 SCHOOL OF FOOD SCI., HAWKESBURY AGRIC. COLL., RICHMOND, NSW, AUSTRALIA, vol. 14, no. 2, page 172
- DATABASE BIOSIS [en ligne] BIOSCIENCES INFORMATION SERVICE, PHILADELPHIA, PA, US; 1998 INNOCENTE N ET AL: "Emulsifying properties of the total fraction and the hydrophobic fraction of bovine milk proteose-peptones." Database accession no. PREV199900369856 XP002210734 & INTERNATIONAL DAIRY JOURNAL, vol. 8, no. 12, 1998, pages 981-985, ISSN: 0958-6946
- DATABASE FSTA [en ligne] INTERNATIONAL FOOD INFORMATION SERVICE (IFIS), FRANFURT/MAIN, DE; INTERNATIONAL DAIRY CONGRESS ((XXI SYMPOSIUM)) ET AL: "(In 'XXI International Dairy Congress. GVol. 1, Book 2' ((see FSTA (1983) 15 G8P1333)).)" Database accession no. 83-4-08-p1349 XP002246693 & 1982, pages 187-210,

## Description

La présente invention concerne des crèmes laitières reconstituées.

Le marché des crèmes laitières reconstituées est en expansion, et les consommateurs et producteurs souhaitent des produits de plus en plus performants.

Une caractéristique recherchée pour les crèmes laitières est une bonne aptitude au foisonnement, soit une bonne aptitude à incorporer de l'air lorsqu'elles sont fouettées.

Une autre caractéristique recherchée est une bonne résistance à la lipolyse, un phénomène qui, en provoquant l'apparition d'acides gras libres, confère à la crème un goût rance rendant le produit impropre à la consommation.

Par ailleurs, les crèmes laitières épaisses, c'est-à-dire présentant une viscosité importante sont préférées pour certaines applications culinaires. En effet, elles sont particulièrement adaptées pour réaliser des sauces ou des nappages. Dans les industries agroalimentaires, et notamment en fromagerie, des crèmes laitières à texture sur mesure sont recherchées pour réaliser différents types de produit.

Les crèmes laitières modernes sont souvent allégées en matières grasses, et donc naturellement moins épaisses que les crèmes non allégées. Elles doivent donc être épaissies pour répondre aux attentes des consommateurs. Une technologie actuellement utilisée fait appel à un procédé physique qui permet l'épaississement des crèmes laitières allégées.

Cependant ces crèmes épaissies sont généralement instables dans le temps et ont tendance à se déphaser. Pour résoudre ce problème, on peut évidemment ajouter des additifs de stabilisation, mais dans ce cas, on ne peut plus parler d'une crème laitière, car ces additifs ne sont pas eux-mêmes originaires du lait.

L'invention a pour but de fournir des crèmes laitières reconstituées présentant des propriétés améliorées.

On a maintenant trouvé avec surprise qu'en utilisant dans des crèmes laitières une fraction protéique du lait connue notamment des documents GB-A-147 896, JP 03 063293 A et DATA BASE FTSA, International Food Information Service (IFIS), FranFURT MAIN, DE : Peltonen R I : « Characterization of whey protein concentrates with regard to factors that affect their function at interfaces », qui est utilisée comme émulsifiant dans des émulsions qui ne sont pas des produits laitiers, on obtient des propriétés améliorées des crèmes laitières reconstituées. En particulier, on obtient des crèmes laitières reconstituées présentant un comportement rhéologique très intéressant. On a également trouvé que l'utilisation de cette fraction protéique du lait permettait d'obtenir des crèmes montrant d'autres propriétés améliorées.

L'invention a pour objet une crème laitière reconstituée contenant du babeurre, de la matière grasse laitière anhydre, de l'eau et de la protéose-peptone.

Par « protéose-peptone », on entend désigner dans le cadre du présent texte une fraction protéose-peptones bien connue de la littérature, qui est dérivée du lait et résistante à la chaleur. Cette fraction sera désignée dans ce texte par « protéose-peptone » ou « PPT ».

La protéose-peptone est de préférence incorporée à la crème laitière suivant l'invention après la reconstitution de cette dernière. On peut également l'incorporer avant la reconstitution de la crème laitière. De préférence, les crèmes laitières reconstituées de l'invention comportent au plus 30 % de matière grasse. Elles sont épaisses tout en étant allégées en matières grasses, ce qui est évidemment une caractéristique particulièrement intéressante.

La protéose-peptone est de préférence présente en une quantité comprise entre 1 et 20 % du poids total de matière grasse de la crème. Elle peut par exemple être à raison de 10 % du poids total de matière grasse, ou encore de 3,33% du poids total de matière grasse.

La protéose-peptone peut être obtenue par un procédé comprenant les étapes suivantes :
- préparation d'un produit laitier choisi dans le groupe consistant dans le lait entier, le lait écrémé, et les solutions de concentré de protéines du lactosérum,
- chauffage
- refroidissement
- acidification
- centrifugation
- lyophilisation du surnageant.

De préférence, ces étapes se déroulent dans les conditions suivantes :
- chauffage pendant 30 minutes à 90°C
- refroidissement à 20°C
- acidification à pH 4,6
- centrifugation à 5000 g pendant 10 minutes
- lyophilisation du surnageant.

De manière particulièrement préférée, le procédé comporte en outre les étapes suivant avant la lyophilisation :
- précipitation
- seconde centrifugation
- dialyse.

Plus particulièrement, la précipitation peut se faire par ajout de sulfate d'ammonium à 65% de saturation au surnageant de la première centrifugation, on peut effectuer la seconde centrifugation à 5000 g pendant 10 minutes, et remettre en suspension le culot obtenu, dialyser à 4°C contre de l'eau distillée et effectuer la lyophilisation finale sur le produit dialysé.

L'invention sera illustrée ci-dessous par la description d'exemples d'exécution, avec référence aux figures annexées, dans lesquelles :
la figure 1 illustre les caractéristiques rhéologiques de crèmes laitières reconstituées obtenues respectivement à partir d'une composition suivant l'état de la technique , d'une composition témoin et de compositions suivant l'invention reprises dans les exemples ci-dessous, et
la figure 2 illustre les caractéristiques rhéologiques de crèmes laitières reconstituées respectivement à partir d'une composition suivant l'état de la technique et d'une composition suivant l'invention après stockage à 4°C.

### Exemples

Une crème laitière reconstituée connue de l'état de la technique et plusieurs crèmes laitières reconstituées suivant l'invention ont été préparées, et leurs différentes propriétés ont été examinées, en particulier les caractéristiques rhéologiques (mesure de la viscosité), mais aussi la stabilité, l'aptitude au foisonnement et la résistance à la lipolyse.

### Exemple 1

### Composition 1 suivant l'état de la technique

On a préparé une composition standard connue, à environ 30 % en poids de matière grasse contenant
- 6.66 g de babeurre (BBC)
- 29.58 g de matière grasse laitière anhydre (MGLA)
- 63.76 g d'eau.

Les compositions 2 à 6 utilisées sont toutes des crèmes laitières reconstituées suivant l'invention.

### Composition 2

On a préparé une composition à environ 30 % en poids de matière grasse contenant
- 6.66 grammes de babeurre (BBC)
- 29.58 g de matière grasse laitière anhydre (MGLA)
- 63.76 g d'eau, et
- 3 g de protéose-peptone (PPT).

Le babeurre est une poudre de babeurre lyophilisée commercialisée par la S.A. CORMAN sous l'appellation " BBC poudre", et la matière grasse laitière anhydre standard (MGLA) est également fournie par la S.A. CORMAN.

La reconstitution des crèmes laitières à partir des compositions est réalisée par homogénéisation pendant 2 minutes à l'aide d'un Ultra-Turax T40 à 1000 rpm, en contrôlant la température de l'émulsion à l'aide d'un bain-marie thermostatisé à 75°C, cette température assurant la pasteurisation de l'émulsion.

Dans la composition 2, le contenu en protéose-peptone est de 10 % en poids par rapport au poids de matière grasse de la composition. La protéose-peptone est incorporée au mélange avant l'étape de reconstitution de la crème laitière.

La protéose-peptone utilisée dans les compositions 2 à 4 suivant l'invention est obtenue suivant la méthode d'extraction suivante : on réalise une solution contenant 50 g de concentré de protéines du lactosérum (whey protein concentrate: WPC) commercialisé sous le nom lacprodan 80 par MD food ingredients dans 2 litres d'eau distillée, et on la chauffe pendant 30 minutes à 90°C. On laisse cette solution refroidir jusqu'à 20°C et on l'acidifie jusqu'à pH 4,6 à l'aide d'une solution d'HCI 1N. On centrifuge ensuite la solution à 5000 g pendant 10 minutes (centrifugeuse Beckman - rotor JA-14). On récupère le surnageant, et on le lyophilise. La poudre de protéose-peptone obtenue est conservée à 4°C.

On constate que, de manière surprenante, toutes les propriétés de la crème laitière suivant l'invention obtenue sur base de la composition 2 mentionnées ci-dessus sont améliorées par rapport à celles de la crème laitière de l'état de la technique obtenue à partir de la composition 1.

### Composition 3

On a préparé une composition à environ 30 % en poids de matière grasse contenant
- 6.66 grammes de babeurre (BBC)
- 29.58 g de matière grasse laitière anhydre (MGLA)
- 63.76 g d'eau.

On l'a reconstituée suivant la méthode décrite plus haut . Il est important de noter qu' on a ajouté 3 g de protéose-peptone (PPT) après et non avant la reconstitution de la crème laitière, comme c'est le cas dans la composition 2.

Cette composition 3 suivant l'invention est donc semblable à la composition 2, mais la crème laitière reconstituée obtenue est différente car la protéose-peptone est ajoutée après l'étape de reconstitution de la crème et pas avant celle-ci.

Lors de la reconstitution de la crème à partir de la composition 3, il est clair que seul le babeurre joue le rôle d'émulsifiant. La protéose-peptone, connue elle aussi par ailleurs dans la littérature comme ayant un rôle émulsifiant joue manifestement ici un autre rôle, puisqu'elle est ajoutée après que l'émulsion a déjà eu lieu.

### Composition 4

On a préparé une composition à environ 30 % en poids de matière grasse contenant
- 6.66 grammes de babeurre (BBC)
- 29.58 g de matière grasse laitière anhydre (MGLA)
- 63.76 g d'eau,
   puis on a reconstitué la crème laitière suivant la méthode décrite plus haut et on a ajouté après reconstitution 1 g de protéose-peptone(PPT)

Cette crème reconstituée à partir de la composition 4 suivant l'invention est donc préparée comme la crème reconstituée à partir de la composition 3 mais ne comprend que 1 g de PPT au lieu de 3.g

### Exemple 2 :

### Composition 5 :

On a préparé une composition à environ 30 % en poids de matière grasse contenant
- 6.66 grammes de babeurre (BBC)
- 29.58 g de matière grasse laitière anhydre (MGLA)
- 63.76 g d'eau, et
- 3 g de protéose-peptone (PPT) .
La PPT est ajoutée après reconstitution de la crème.

La protéose-peptone utilisée dans la crème laitière reconstituée suivant l'invention à partir de composition 5 est obtenue suivant le procédé d'extraction suivant : on réalise une solution contenant 50 g de concentré de protéines du lactosérum (whey protein concentrate : WPC) commercialisé sous le nom lacprodan 80 par MD food ingredients dans 2 litres d'eau distillée, et on la chauffe pendant 30 minutes à 90°C. On laisse cette solution refroidir jusqu'à 20°C et on l'acidifie jusqu'à pH 4,6 à l'aide d'une solution d'HCI 1N. On centrifuge ensuite la solution à 5000 g pendant 10 minutes (centrifugeuse Beckman - rotor JA-14). On récupère le surnageant, on y ajoute du sulfate d'ammonium à 65% de saturation et on centrifuge à 5000 g pendant 10 minutes (centrifugeuse Beckman - rotor JA-14). On récupère le culot de centrifugation, on le remet en suspension dans de l'eau distillée et on réalise une dialyse. Le résultat de la dialyse est lyophilisé. La poudre de protéose-peptone obtenue est conservée à 4°C.

Par rapport au procédé utilisé pour obtenir la protéose-peptone utilisée dans les compositions 2 à 4, ce procédé comporte, avant la lyophilisation, trois étapes supplémentaires, de précipitation, de centrifugation et de dialyse, et la lyophilisation se fait sur le produit dialysé.

### Exemple 3

On a préparé une composition à environ 30 % en poids de matière grasse contenant
- 6.66 grammes de babeurre (BBC)
- 29.58 g de matière grasse laitière anhydre (MGLA)
- 63.76 g d'eau, et
   3 g de protéose-peptone (PPT).
   La PPT est ajoutée avant reconstitution de la crème laitière .

### La PPT est extraite à partir de lait écrémé comme suit :

La protéose-peptone est obtenue suivant la méthode d'extraction suivante: on chauffe du lait écrémé pendant 30 minutes à 90°C. On le laisse refroidir jusqu'à 20°C et on l'acidifie jusqu'à pH 4,6 à l'aide d'une solution d'HCI 1N. On le centrifuge ensuite à 5000 g pendant 10 minutes (centrifugeuse Beckman - rotor JA-14). On récupère le surnageant, on y ajoute du sulfate d'ammonium à 65% de saturation et on centrifuge à 5000 g pendant 10 minutes (centrifugeuse Beckman - rotor JA-14). On récupère le culot de centrifugation, on le remet en suspension dans de l'eau distillée et on réalise une dialyse. Le résultat de la dialyse est lyophilisé. La poudre de protéose-peptone obtenue est conservée à 4°C.
Cette composition 6 est proche de la composition de la composition 5, si ce n'est que le matériel de départ pour l'extraction de la protéose-peptone est du lait écrémé et non du whey protein concentrate.(WPC)

### 1. Mesure de la viscosité

La viscosité des crèmes laitières reconstituées à partir des différentes compositions ci-dessus est mesurée à l'aide d'un rhéomètre BOHLIN muni d'un dispositif de mesure de configuration cône/plan (C/P) 4°/40 mm en établissant des courbes d'écoulement et de viscosité pour des gradients de vitesse allant de 0,1 à 100 s⁻¹ en 12 minutes 30 secondes.

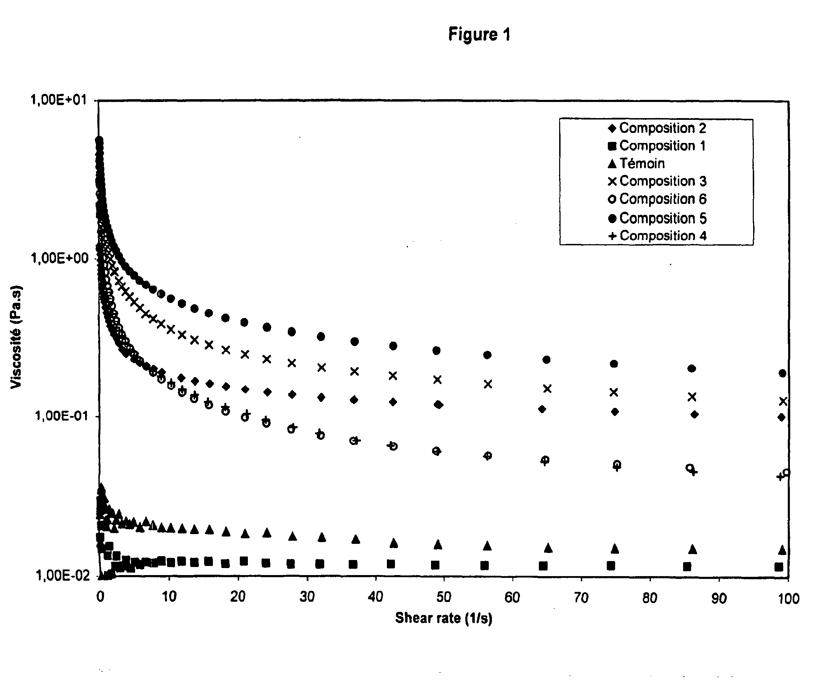

La Fig.1 illustre les caractéristiques rhéologiques des crèmes reconstituées à partir de la composition 1 (état de la technique), des compositions 2 à 6 suivant l'invention et d'une composition témoin T décrite ci-dessous.

Les mesures de rhéologie sont effectuées à 10°C. L'échelle de viscosité représentée est logarithmique; les valeurs des ordonnées vont de 0,01 à 10 Pascal.seconde (Pa.s).

On voit que la crème de l'état de la technique obtenue à partir de la composition 1 (symbolisée par un carré noir) montre un comportement rhéologique typiquement newtonien : sa viscosité (en ordonnée) reste constante lorsque que le gradient de vitesse (en abscisse) augmente. La viscosité est d'environ 1,2.10⁻² Pa.s.

Par contre, la crème obtenue, suivant l'invention à partir de la composition 2 (symbolisée par un carré noir sur pointe) montre un comportement typiquement rhéofluidifiant : sa viscosité décroît drastiquement avec l'augmentation du gradient de vitesse. La viscosité initiale est de 1,2 Pa.s, ce qui est très considérablement plus élevé (d'un facteur 100) que la viscosité de la composition 1. La viscosité au gradient de vitesses 100 s⁻¹ est de 1.10⁻¹ Pa.s.

Afin de vérifier que l'effet observé n'est pas lié à la simple addition de matière sèche supplémentaire, on a préparé une crème à partir d'une composition témoin T à environ 30 % de matière grasse ayant une formule proche de celle de la composition 2 mais contenant 3 g de babeurre (BBC) au lieu des 3 g de protéose-peptone. Cette composition témoin T a donc la formulation suivante :
- 9.66 grammes de babeurre (BBC)
- 29.58 g de matière grasse laitière anhydre (MGLA) et
- 63.76 g d'eau.

Les résultats pour la crème reconstituée à partir de cette composition T ( symbolisée sur la Fig.1 par des triangles) sont proches de ceux obtenus pour la crème reconstituée à partir de la composition 1, ce qui indique que la différence de comportement rhéologique de la crème de l'invention obtenue à partir de la composition 2 n'est pas liée à une plus grande proportion de matière sèche dans la crème mais bien à la présence de protéose-peptone.

La crème reconstituée à partir de la composition 3, (symbolisée par des croix inclinées) dans laquelle la protéose-peptone est ajoutée après et non avant la reconstitution de la crème montre un résultat meilleur que celui de la crème recnstituée à partir de la composition 2.

La crème reconstituée à partir de la composition 4 (symbolisée par des croix droites) dans laquelle on a ajouté seulement 1 gramme de PPT au lieu de 3 grammes dans le cas de la composition 3 donne néanmoins de bons résultats.

La crème obtenue à partir de la composition 5, ( symbolisée par des ronds noirs), dans laquelle la protéose-peptone est ajoutée après reconstitution et obtenue suivant une méthode de purification plus sophistiquée donne les meilleurs résultats.

La crème obtenue à partir de la composition 6, (représentée par des cercles blancs) dans laquelle la protéose-peptone est obtenue suivant une méthode de purification similaire à celle utilisée pour la PPT de la composition 5, mais non pas à partir de WPC mais de lait écrémé. et donne des résultats moins bons que ceux obtenus pour la crème reconstituée à partir de la composition 5, qui sont néanmoins proches de ceux obtenus pour la crème reconstituée à partir de avec la composition 4.

Toutes les crèmes laitières suivant l'invention reconstituées ayant une des compositions 2 à 6 ont un comportement rhéofluidifiant.

### Exemple 4

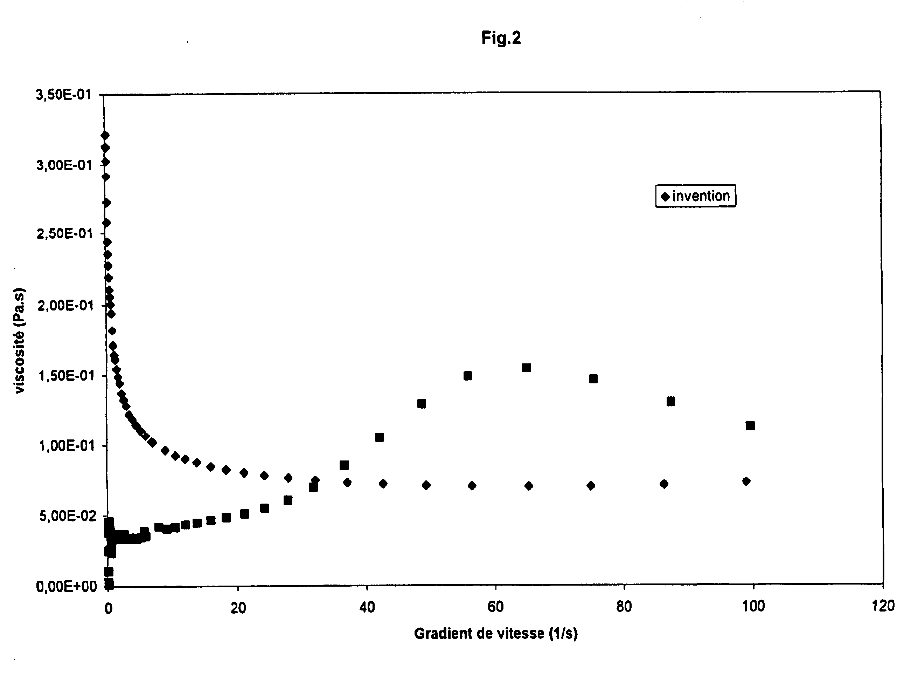

La Fig.2 illustre les caractéristiques rhéologiques de la crème reconstituée à partir de la composition 1 de l'état de la technique (symbolisée sur la Fig.2 par des carrés droits) et de la crème obtenue à partir de la composition 2 suivant l'invention , (représentée sur la Fig. 2 par des carrés sur pointe) après stockage à 4°C, les mesures étant effectuées à 25°C. Le graphe n'est pas logarithmique. Les valeurs des ordonnées vont de 0 à 3,5 10⁻¹ Pascal.seconde (Pa.s).

Après un stockage à 4°C, la viscosité initiale de la créme reconstituée à partir de la composition 1 est de 3.10⁻² Pa.s. Le comportement de la crème reconstituée à partir de la composition 1 montre une augmentation de la viscosité lorsque le gradient de vitesse augmente, puis une diminution de celle-ci. Ce comportement est typiquement celui d'un crème barattée. Par contre, le comportement rhéologique de crème reconstituée à partir de la composition 2 suivant l'invention n'est pas sensiblement modifié après un stockage à 4°C, comme on le remarque en comparant les figures 1 et 2. La viscosité initiale est d'environ 3 10⁻¹ Pa.s. et la viscosité à 100 s⁻¹ d'environ 7.10⁻² Pa.s.

On voit donc que la crème reconstituée suivant l'invention à partir de la composition 2 est considérablement plus épaisse que la crème de l'état de la technique, et ce aussi bien avant qu'après le stockage à 4°C.

Lorsque cette crème suivant l'invention est agitée, elle reste épaisse, mais néanmoins suffisamment fluide, grâce à son caractère rhéofluidifiant, pour permettre une bonne mise en oeuvre, notamment lors du pompage, du mélange et du conditionnement.

### 2. Mesure de la stabilité

La stabilité des crèmes peut s'observer à l'oeil nu, en cas de séparation nette des phases. Lors du stockage à 4°C, de la crème obtenue à partir de la composition 1, le crémage et la clarification sont clairement visibles rapidement. Si on effectue un stockage à 4°C pendant 2 jours suivi de 5 jours à 20°C, on constate qu'une partie solide précipite.

Par contre, après sept jours de stockage à 4°C, aucune séparation de phase n'est visible à l'oeil nu pour la crème de l'invention obtenue à partir de la composition 2. Ceci est confirmé grâce à l'utilisation d'un Turbiscan. Cet appareil permet de mesurer la déstabilisation d'émulsions au cours du temps. Son principe repose sur une mesure, à l'aide d'un balayage vertical du tube contenant l'échantillon, de la transmission et la rétrodiffusion de la lumière, ce qui permet de détecter les variations locales de concentration et/ou de taille de particules en milieu concentré bien avant l'oeil nu.

Après les sept jours de stockage, aucune séparation de phase n'est détectable au Turbiscan, et la crème conserve une consistance fluide et homogène.

### 3. Mesure de l'aptitude au foisonnement

L'aptitude au foisonnement a été évaluée de façon classique, à l'aide d'un appareil Schlagsahne-Prüfgerät-elektronic. Lors du foisonnement, de l'air est incorporé dans la crème et donc le volume augmente, ce qui se traduit par une augmentation de la hauteur de la crème dans l'appareil. Le volume de la crème est mesuré avant et après foisonnement pendant 120 secondes; un rapport entre les deux valeurs est déterminé. Il correspond au pourcentage d'expansion de la crème. Ce pourcentage passe de 1,7 pour la crème reconstituée à partir de la composition 1 de l'état de la technique à 2,5 pour la crème reconstituée à partir de la composition 2 suivant l'invention.

On voit donc que l'aptitude au foisonnement est améliorée de façon significative pour la crème obtenue à partir de la composition 2 suivant l'invention.

### 4. Mesure de la résistance à la lipolyse

50µl d'une suspension de lipase pancréatique de porc (SIGMA) sont ajoutés à 10 ml de crème dont on doit évaluer la résistance à la lipolyse ; les tubes (fermés) contenant la crème sont placés à 4°C. Des tubes sans lipase (témoins) sont également placés dans les mêmes conditions. La réaction est arrêtée thermiquement, les échantillons sont placés à 90°C pendant 10 minutes dans l'eau afin de dénaturer la lipase. La matière grasse est extraite de chaque tube par une méthode classique. Les acides gras libres sont dosés classiquement par titrage. Le résultat du titrage indique l'acidité de la crème, due à l'action de la lipase. On constate que la crème reconstituée à partir de la composition 2 suivant l'invention est 2,5 fois plus résistante que la crème reconstituée à partir de la composition 1 de l'état de la technique après 72 heures de réaction.

## Revendications

1. Crème laitière reconstituée contenant du babeurre, de la matière grasse laitière anhydre, de l'eau, **caractérisée en ce qu'**elle comporte en outre de la protéose-peptone.

2. Crème laitière reconstituée suivant la revendication 1, **caractérisée en ce que** la protéose-peptone est incorporée à la crème après la reconstitution de cette dernière

3. Crème laitière reconstituée, suivant la revendication 1, **caractérisée en ce que** la protéose-peptone est incorporée à la crème avant la reconstitution de cette dernière.

4. Crème laitière reconstituée suivant l'une quelconque des revendications précédentes, **caractérisée en ce qu**'elle comporte au plus 30 % de matière grasse.

5. Crème laitière reconstituée suivant la revendication 4, **caractérisée en ce que** la protéose-peptone est présente en une quantité comprise entre 1 et 20 % du poids total de matière grasse.

6. Crème laitière reconstituée suivant la revendication 5, **caractérisée en ce que** la protéose-peptone est présente à raison de 10 % du poids total de matière grasse.

7. Crème laitière reconstituée suivant la revendication 5, **caractérisée en ce que** la protéose-peptone est présente à raison de 3,33% du poids total de matière grasse.

8. Crème laitière reconstituée suivant la revendication 5, **caractérisée en ce que** la protéose-peptone peut être obtenue par un procédé comprenant les étapes suivantes :
- préparation d'un produit laitier choisi dans le groupe consistant dans le lait entier, le lait écrémé, et les solutions de concentré de protéines du lactosérum,
- chauffage
- refroidissement
- acidification
- centrifugation
- lyophilisation du surnageant.

9. Crème laitière reconstituée suivant la revendication 8, **caractérisée en ce que** la protéose-peptone peut être obtenue par un procédé comprenant les étapes suivantes :
- chauffage pendant 30 minutes à 90°C
- refroidissement à 20°C
- acidification à pH 4,6
- centrifugation à 5000 g pendant 10 minutes
- lyophilisation du surnageant.

10. Crème laitière reconstituée suivant l'une quelconque des revendications 8 et 9, **caractérisée en ce que** le procédé comporte en outre les étapes suivantes avant la lyophilisation :
- précipitation
- seconde centrifugation
- dialyse

11. Crème laitière reconstituée suivant la revendication 10, **caractérisée en ce que**
- la précipitation se fait par ajout de sulfate d'ammonium à 65% de saturation au surnageant de la première centrifugation,
- on effectue la seconde centrifugation à 5000 g pendant 10 minutes,
- on remet en suspension le culot obtenu,
- on dialyse à 4°C contre de l'eau distillée
- on effectue la lyophilisation finale sur le produit dialysé.

## Claims

1. Reconstituted dairy cream containing buttermilk, anhydrous milk fat, water, **characterized in that** it further comprises proteose peptone.

2. Reconstituted dairy cream according to claim 1, **characterized in that** the proteose peptone is incorporated into the cream after reconstitution thereof.

3. Reconstituted dairy cream according to claim 1, **characterized in that** the proteose peptone is incorporated into the cream before reconstitution thereof.

4. Reconstituted dairy cream according to any of the preceding claims, **characterized in that** it comprises at most 30 % fat.

5. Reconstituted dairy cream according to claim 4, **characterized in that** the proteose peptone is present in an amount comprised between 1 and 20 % by total weight of fat.

6. Reconstituted dairy cream according to claim 5, **characterized in that** the proteose peptone is present in an amount of 10 % by total weight of fat.

7. Reconstituted dairy cream according to claim 5, **characterized in that** the proteose peptone is present in an amount of 3.33 % by total weight of fat.

8. Reconstituted dairy cream according to claim 5, **characterized in that** the proteose peptone can be obtained by a process comprising the following steps:
- preparation of a dairy product selected from the group consisting of whole milk, skimmed milk and whey protein concentrate solutions,
- heating
- cooling
- acidification
- centrifugation
- freeze drying the supernatant.

9. Reconstituted dairy cream according to claim 8, **characterized in that** the proteose peptone can be obtained by a process comprising the following steps:
- heating for 30 minutes at 90 °C
- cooling to 20 °C
- acidification to pH 4.6
- centrifugation at 5000 g for 10 minutes
- freeze drying the supernatant.

10. Reconstituted dairy cream according to any of claims 8 and 9, **characterized in that** the process further comprises before freeze drying the following steps:
- precipitation
- second centrifugation
- dialysis.

11. Reconstituted dairy cream according to claim 10, **characterized in that**
- the precipitation is performed by adding ammonium sulfate at 65% saturation to the supernatant of the first centrifugation,
- performing the second centrifugation at 5000 g for 10 minutes,
- resuspending the obtained pellet,
- dialyzing at 4 °C against distilled water
- performing the last freeze drying on the dialyzed product.

## Patentansprüche

1. Wiederhergestellte Milchcreme, die Buttermilch, wasserfreies Milchfett und Wasser enthält, **dadurch gekennzeichnet, dass** sie darüber hinaus auch Proteose-Pepton umfasst.

2. Wiederhergestellte Milchcreme nach Anspruch 1, **dadurch gekennzeichnet, dass** das Proteose-Pepton in die Milchcreme nach deren Wiederherstellung eingebracht wird.

3. Wiederhergestellte Milchcreme nach Anspruch 1, **dadurch gekennzeichnet, dass** das Proteose-Pepton in die Milchcreme vor deren Wiederherstellung eingebracht wird.

4. Wiederhergestellte Milchcreme nach einem der vorhergehenden Ansprüche, **dadurch gekennzeichnet, dass** sie höchstens 30 % Fett umfasst.

5. Wiederhergestellte Milchcreme nach Anspruch 4, **dadurch gekennzeichnet, dass** das Proteose-Pepton in einer Menge vorhanden ist, die zwischen 1 und 20 % des Gesamtgewichts an Fett beträgt.

6. Wiederhergestellte Milchcreme nach Anspruch 5, **dadurch gekennzeichnet, dass** das Proteose-Pepton in einem Anteil von 10 % des Gesamtgewichts an Fett vorhanden ist.

7. Wiederhergestellte Milchcreme nach Anspruch 5, **dadurch gekennzeichnet, dass** das Proteose-Pepton in einem Anteil von 3,33 % des Gesamtgewichts an Fett vorhanden ist.

8. Wiederhergestellte Milchcreme nach Anspruch 5, **dadurch gekennzeichnet, dass** das Proteose-Pepton durch ein Verfahren gewonnen werden kann, das folgende Schritte umfasst:
- Herstellung eines Milchprodukts, das aus der Gruppe ausgewählt ist, die aus Vollmilch, Magermilch, und den Lösungen aus einem Konzentrat von Molkeneiweißen besteht,
- Erwärmen
- Abkühlen
- Ansäuern
- Zentrifugieren
- Gefriertrocknen der Aufschwimmmasse.

9. Wiederhergestellte Milchcreme nach Anspruch 8, **dadurch gekennzeichnet, dass** das Proteose-Pepton durch ein Verfahren gewonnen werden kann, das folgende Schritte umfasst:
- 30-minütiges Erwärmen bei 90°C
- Abkühlen auf 20°C
- Ansäuern auf einen pH-Wert von 4,6
- 10-minütiges Zentrifugieren bei 5000 g
- Gefriertrocknen der Aufschwimmmasse.

10. Wiederhergestellte Milchcreme nach einem der Ansprüche 8 und 9, **dadurch gekennzeichnet, dass** das Verfahren vor der Gefriertrocknung darüber hinaus folgende Schritte umfasst:
- Ausfällung
- zweiter Zentrifugiervorgang
- Dialyse.

11. Wiederhergestellte Milchcreme nach Anspruch 10, **dadurch gekennzeichnet, dass**
- die Ausfällung unter Zugabe von Ammoniumsulfat bei 65%-iger Sättigung der aus dem ersten Zentrifugiervorgang stammenden Aufschwimmmasse erfolgt,
- der zweite Zentrifugiervorgang 10 Minuten lang bei 5000 g durchgeführt wird,
- die erhaltene Restmasse wieder in Suspension gebracht wird,
- bei 4°C gegenüber destilliertem Wasser dialysiert wird,
- die endgültige Gefriertrocknung am dialysierten Produkt vorgenommen wird.
